# EUROPÄISCHE PATENTSCHRIFT

(11) **EP 3 964 046 B1**
(45) Veröffentlichungstag und Bekanntmachung des Hinweises auf die Patenterteilung: **26.02.2025**
(21) Anmeldenummer: 21189061.1
(22) Anmeldetag: 02.08.2021
(51) Int. Cl.: A01D 45/02, A01D 41/02, A01D 34/835, A01D 34/66, A01D 34/73, A01D 34/81

(54) **ERNTEVORSATZ**
HARVESTING ATTACHMENT
BEC CUEILLEUR

(30) Priorität: 04.09.2020 DE 102020123243
(43) Veröffentlichungstag der Anmeldung: 09.03.2022
(73) Patentinhaber: CLAAS Hungária Kft., 5200 Törökszentmiklós (HU)
(72) Erfinder: Lütke Harmann, Tim, 48324 Sendenhorst (DE); Aerdker, Bernhard, 48231 Warendorf (DE); Herter, Felix, 33428 Harsewinkel (DE); Bodi, Laszlo, Szolnok 5000 (HU); Csonka, Peter, 8698 Somogyvár (HU)
(74) Vertreter: CLAAS 365FarmNet GmbH

(56) Entgegenhaltungen:
- EP-A1- 0 365 019
- EP-A1- 3 199 010
- EP-A1- 4 098 101
- DE-A1- 102017 222 587
- DE-A1- 102018 105 858

## Beschreibung

Die vorliegende Erfindung betrifft einen Erntevorsatz zur Verwendung an einer selbstfahrenden Erntemaschine sowie eine mit einem solchen Erntevorsatz ausgestattete selbstfahrende Erntemaschine.

Erntevorsätze, die die Stiele eines zu erntenden Pflanzenbestands kappen, um daraufhin die bodenfernen, im allgemeinen die Fruchtstände umfassenden Pflanzenteile zu bergen und einer Dresch- oder Häckselverarbeitung durch die selbstfahrende Erntemaschine zuzuführen, sind in vielen Ausgestaltungen bekannt. Die nach der Ernte auf dem Acker verbleibenden Stoppeln behindern, auch wenn sie untergepflügt werden, die Aussaat der Folgefrucht. Außerdem können sie Schädlingen wie etwa dem Maiszünsler als Unterschlupf dienen, was zu empfindlichen Ernteeinbußen führen kann, wenn auf derselben oder einer benachbarten Fläche dieselbe Feldfrucht im Folgejahr erneut angebaut wird.

Die Stoppeln in einem auf die Ernte folgenden Arbeitsgang zu beseitigen ist aufwendig und wenig wirtschaftlich. In DE 10 2014 219 694 ist daher ein Erntevorsatz für Mais vorgeschlagen worden, der eine Ernteeinheit zum Schneiden und Bergen der bodenfernen Teile einer Maispflanze mit einer Einheit zum Herausziehen und Zerkleinern der Maisstoppeln während der Ernte kombiniert.

Das Herausziehen der Maisstoppeln erfordert hohen Kraftaufwand; gleichzeitig ist es nur dann wirksam, wenn die Stoppeln nahezu vollständig erfasst werden, da eine kleine Zahl intakt bleibender Stoppeln ausreichen kann, um die Wirksamkeit der Maßnahme in Frage zu stellen.

Aus EP 2 107 867 B1 ist ein Erntevorsatz bekannt, bei dem eine Zerkleinerungseinheit sich darauf beschränkt, oberirdische Teile der Stoppeln zu zerstören. Hier ist eine vollständige Bearbeitung aller Stoppeln einfacher und mit geringerem Energieaufwand möglich, allerdings nur wenn es gelingt, die Zerkleinerungseinheit dicht genug über der Erdoberfläche zu führen. Deren Beweglichkeit relativ zur Ernteeinheit neigt jedoch dazu, durch die von der Zerkleinerungseinheit abgeschlagenen und aufgewirbelten Pflanzenreste eingeschränkt zu werden.

Weitere Erntevorsätze beziehungsweise Geräte zur Stoppelzerkleinerung lassen sich z.B. in DE 10 2017 222587 A1, EP 0 365 019 A1, EP 3 199 010 A1 und DE 10 2018 105858 A1 finden.

Eine Aufgabe der Erfindung ist, einen Erntevorsatz zu schaffen, der eine zuverlässige und vollständige Zerstörung der Stoppeln mit geringem Zeit- und Energieeinsatz ermöglicht.

Die Aufgabe wird zum einen gelöst durch einen Erntevorsatz für eine selbstfahrende Erntemaschine mit einer Ernteeinheit zum Schneiden und Bergen von bodenfernen Teilen eines zu erntenden Pflanzenbestands und einer Zerkleinerungseinheit zum Zerkleinern von von der Ernteeinheit nicht geborgenen bodennahen Teilen des Pflanzenbestands, die wenigstens einen beweglich an die Ernteeinheit gekoppelten, von einem Gehäuse umgebenen und im Betrieb am Boden abgestützten Unterflurhäcksler umfasst. Indem das Gehäuse die von dem Unterflurhäcksler erzeugten Stoppelbruchstücke daran hindert, sich zu verteilen, kann eine Blockade der Zerkleinerungseinheit relativ zur Ernteeinheit vermieden werden, so dass die Zerkleinerungseinheit der Bodenkontur zuverlässig folgen und die Stoppeln vollständig und in für eine vollständige Zerstörung geeigneter Höhe erfassen kann.

Eine die Bodenkontur abtastende Kalotte ist erfindungsgemäß um eine vertikale Drehachse drehangetrieben und dient als Träger für mehrere um eine Drehachse umlaufende Zerkleinerungselemente. Die Drehung der Kalotte erleichtert ein Hinweggleiten über Bodenunebenheiten; indem Kalotte und Zerkleinerungselemente nicht relativ zueinander rotieren, kann der Aufbau des Unterflurhäckslers vereinfacht und die Wahrscheinlichkeit einer Behinderung der Drehung durch zwischen gegeneinander bewegliche Teile eindringenden Schmutz minimiert werden.

Um eine Blockade des Unterflurhäckslers durch unbewegliche Hindernisse zu vermeiden, ist erfindungsgemäß jedes der Zerkleinerungselemente an den Umfang der Kalotte um eine zur Drehachse parallele Achse schwenkbar angelenkt.

Um das Hinweggleiten über Unebenheiten zu erleichtern, ist die Unterseite der Kalotte vorzugsweise ohne steile Flanken konvex gekrümmt. Genauer gesagt sollte der Radius des Umfangs der Kalotte, an dem die Zerkleinerungselemente angeordnet sind, größer sein als der entlang der Drehachse gemessene Abstand zwischen dem Umfang und einem untersten Punkt der Kalotte.

Die Unterseite der Kalotte ist vorzugsweise wenigstens um die Drehachse herum sphärisch oder abgeflacht ellipsoidisch.

Zweck des Unterflurhäckslers ist es nicht, die bereits von der Ernteeinheit gekappten Stiele des Ernteguts ein zweites Mal näher am Boden zu schneiden, sondern die Struktur des Stielrests so vollständig zu zerstören, dass dieser als Winterunterschlupf für Schädlinge nicht mehr brauchbar ist. Dafür ist es wünschenswert, den Stielrest nicht nur in Längsrichtung, sondern auch in Richtung seines Umfangs in mehrere Fragmente zu zerlegen, so dass ggf. weiche innere Teile des Stiels großflächig der Witterung ausgesetzt sind. Hierfür sind Zerkleinerungselemente mit stumpfen Schlagflächen besser geeignet als etwa rotierende Messer. Als stumpf in diesem Sinne kann insbesondere eine Zerkleinerungselement gelten, dessen Krümmungsradius an einer im Betrieb mit den Stoppeln in Kontakt tretenden Oberfläche größer als 1 mm, vorzugsweise größer als 5 mm ist.

Vorteilhaft ist ferner, wenn jedes Zerkleinerungselement in Bezug auf seine Drehrichtung je eine vordere und eine hintere Schlagfläche aufweist. Dies erlaubt es zum einen, die Zerkleinerungselemente an den Kalotten zu montieren, ohne dabei deren Drehsinn berücksichtigen zu müssen; zum anderen kann ein Zerkleinerungselement, wenn eine erste Schlagfläche abgenutzt ist, gewendet und weiterbenutzt werden.

Zur Erhöhung der Standzeit von Kalotte und/oder Zerkleinerungselementen kann ferner eine PTA-Beschichtung vorgesehen werden. PTA (Plasma-Pulver-Auftragschweißen) ist ein Schweißverfahren, das eine metallurgische Verbindung der Beschichtung mit dem Grundwerkstoff ermöglicht; ferner können mit dieser Technik Karbid-Oberflächenschichten hoher Härte erzeugt werden.

Das Gehäuse kann mehreren, vorzugsweise zwei, Unterflurhäckslern gemeinsam sein.

Indem die Kalotten beider Unterflurhäcksler mit dem Boden in Kontakt gebracht werden, kann eine Wankbewegung der Zerkleinerungseinheit gesteuert werden, die es den Zerkleinerungselementen ermöglicht, sich einem quer zur Fahrtrichtung abschüssigen Verlauf der Bodenoberfläche anzupassen. Wenn die Zahl der Unterflurhäcksler in jedem Gehäuse zwei ist, dann kann die Kalotte eines jeden mit dem Boden in Kontakt gehalten werden.

Die bewegliche Kopplung der Zerkleinerungseinheit an die Ernteeinheit kann durch mehrere das Gehäuse mit der Ernteeinheit verbindende Lenker hergestellt sein. Diese Lenker können in einer Seitenansicht ein Viergelenk bilden, um die Orientierung der Drehachse in dieser Seitenansicht auch dann konstant zu halten, wenn sich die Zerkleinerungseinheit relativ zur Ernteeinheit bewegt. Um eine Gierdrehung der Zerkleinerungseinheit in Kontakt mit einem Hindernis zu unterbinden, sollten die Lenker in Breitenrichtung beabstandet sein. Ferner kann wenigstens einer der Lenker mit einem Stellglied gekoppelt sein, um bei Bedarf die Zerkleinerungseinheit relativ zur Ernteeinheit anheben oder senken oder die Drehachse um eine in Querrichtung des Erntevorsatzes verlaufende Achse schwenken zu können.

Das Gehäuse kann eine Deckenplatte, durch die sich die Drehachse erstreckt, und sich von Rändern der Deckenplatte aus nach unten erstreckende Wände zum Abfangen der von der Zerkleinerungseinheit erzeugten Stoppelfragmente aufweisen. Diese Wände erstrecken sich vorzugsweise bis unter die Ebene des Umfangs, in der die Zerkleinerungselemente befestigt sind. Vorzugsweise sind sie wenigstens zum Teil flexibel, um Bodenunebenheiten ausweichen zu können.

Wenn die Zerkleinerungselemente rotieren, bewegen sie sich auf einem Teil ihrer Bahn in der Fahrtrichtung und in einem gegenüberliegenden Teil entgegen der Fahrtrichtung. Damit sie auf ihrer gesamten Bahn die zum Zerkleinern der Stoppeln nötige Geschwindigkeit haben, sollte die Zerkleinerungseinheit an einen Fahrantrieb der Erntemaschine so gekoppelt sein, dass die Umlaufgeschwindigkeit der Zerkleinerungselemente ein Mehrfaches der Fahrgeschwindigkeit der Erntemaschine beträgt.

Damit alle Stoppeln zuverlässig erfasst und zerkleinert werden, auch solche, die sich in Fahrtrichtung vor den Kalotten befinden, müssen die Zerkleinerungselemente so schnell aufeinander folgen, dass sie die Stoppeln erfassen, bevor sie die Kalotten erreichen. Die Zerkleinerungseinheit sollte daher an einen Fahrantrieb der Erntemaschine so gekoppelt sein, dass das Produkt aus radialer Ausdehnung der Zerkleinerungselemente, Anzahl der Zerkleinerungselemente an einer Kalotte und Drehzahl der Kalotte größer ist als die Fahrgeschwindigkeit der Erntemaschine.

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1: einen erfindungsgemäßen Erntevorsatz in einer Ansicht schräg von vorn;
- Fig. 2: den Erntevorsatz in einer Ansicht schräg von hinten;
- Fig. 3: Seitenansichten des Erntevorsatzes in einer Betriebsstellung und während des Anhebens aus der Betriebsstellung;
- Fig. 4: eine Detailansicht einer Zerkleinerungseinheit an der Rückseite des Erntevorsatzes; und
- Fig.5: einen Unterflurhäcksler der Zerkleinerungseinheit.

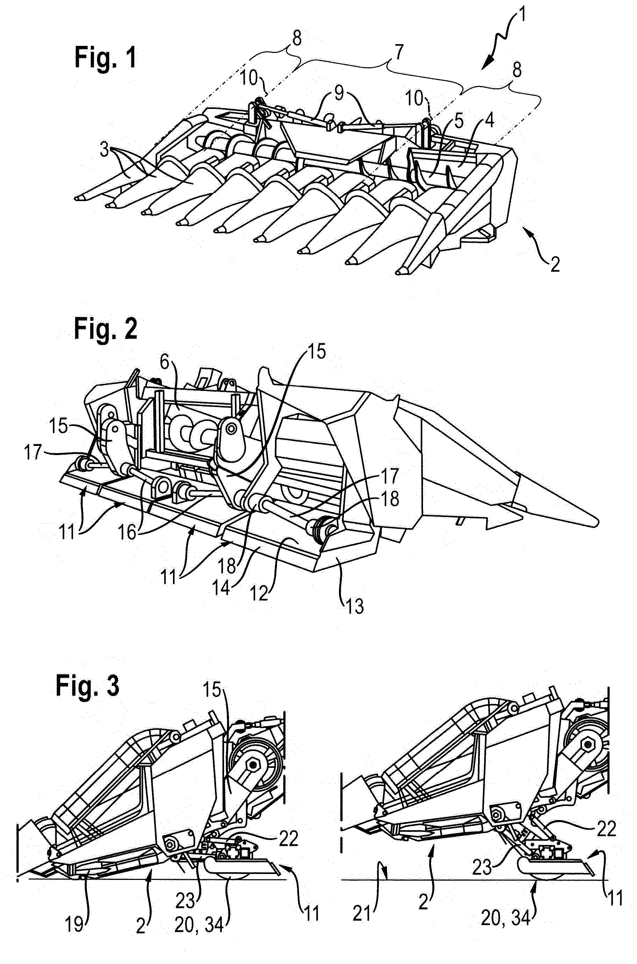

Fig. 1 zeigt einen Erntevorsatz 1 zur Anbringung an einer selbstfahrenden Erntemaschine für die Maisernte in einer Ansicht schräg von vorn. Die in dieser Fig. sichtbaren Komponenten des Erntevorsatzes 1 werden hier zusammenfassend als Ernteeinheit 2 bezeichnet. Spitzen 3 eines sich entlang der Vorderkante des Erntevorsatzes 1 erstreckenden Kamms sind so beabstandet, dass zwischen zwei Spitzen 3 jeweils eine Reihe von Maispflanzen erfasst und ihre Stiele in seitlicher Richtung fixiert werden, während sie von unterhalb der Spitzen rotierenden, in der Ansicht nicht sichtbaren Messern wenige Zentimeter über dem Boden gekappt werden. Hinter dem Kamm erstreckt sich eine Auffangwanne 4, in die das Erntegut hineinfällt. Das Erntegut können - so etwa wenn die Erntemaschine ein Feldhäcksler ist - die vollständigen Maispflanzen sein; im hier betrachteten Fall eines Mähdreschers sind es vorzugsweise nur die Kolben, die durch den Erntevorsatz dem Mähdrescher zugeführt werden, während die Stängel zerkleinert und auf dem Boden abgelegt werden, ohne den Mähdrescher zu durchlaufen.

Eine in der Auffangwanne 4 rotierende Förderschnecke 5 dient dazu, das Erntegut in der Mitte der Auffangwanne 4 zusammenzuraffen und über eine rückseitige Öffnung 6 (s. Fig. 2) der Erntemaschine zuzuführen, an der der Erntevorsatz 1 montiert ist.

Der hier gezeigte Erntevorsatz 1 ist in Querrichtung unterteilt in einen Mittelabschnitt 7 und zwei seitliche Abschnitte 8. Die seitlichen Abschnitte sind mit Hilfe zweier hydraulischer Stellglieder 9 um zu einer oberen Kante des Erntevorsatzes 1 benachbarte Achsen 10 in eine Transportstellung schwenkbar, in der sie auf dem Mittelabschnitt 7 aufliegen. In der Transportstellung ist der Erntevorsatz 1 nicht mehr breiter als die Karosserie der ihn tragenden Erntemaschine, so dass sich die Erntemaschine mit montiertem Erntevorsatz 1 im Straßenverkehr bewegen kann.

In der Ansicht der Fig. 2 sind an einer hinteren unteren Kante des Erntevorsatzes 1 mehrere Zerkleinerungseinheiten 11 zu sehen. Die Zerkleinerungseinheiten 11 haben jeweils ein flaches Gehäuse mit einer im Wesentlichen horizontalen Deckenplatte 12 und Seitenwänden 13 aus Stahlblech und einer flexiblen Rückwand in Form einer Schürze 14 aus Gummi, die von einer rückwärtigen Kante der Deckenplatte 12 herabhängt. An einer in der Fig. 2 nicht sichtbaren Vorderseite ist das Gehäuse offen, damit die beim Kappen der Maisstängel durch die Messer der Ernteeinheit 2 zurückgebliebenen Stoppeln in das Gehäuse der Zerkleinerungseinheiten 11 einrücken können.

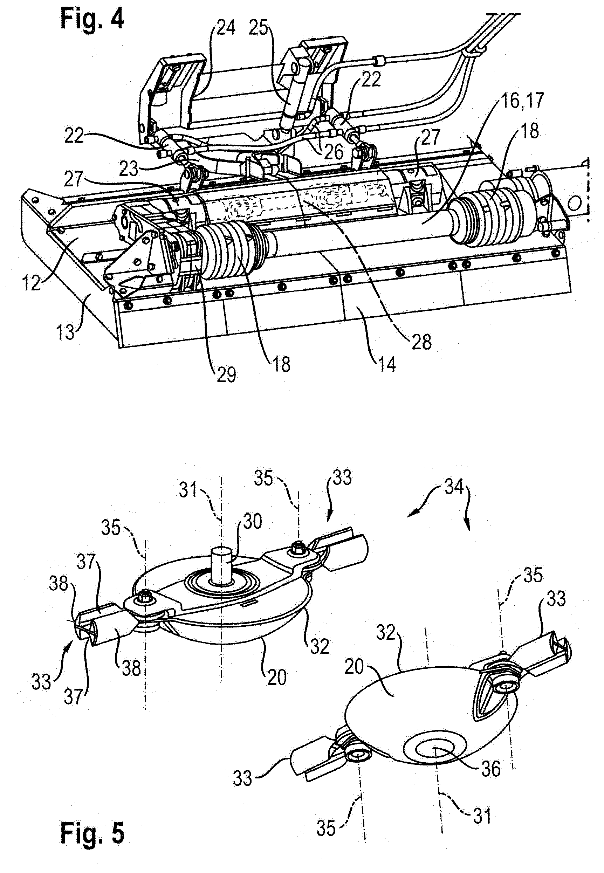

An der Rückseite der Auffangwanne 4 ist ein Getriebe angebracht, das vorgesehen ist, um die Messer und die Förderschnecke 5 der Ernteeinheit 2 sowie bewegliche Elemente der Zerkleinerungseinheiten 11 (die später anhand von Fig. 5 noch genauer beschrieben werden) an eine Zapfwelle der Erntemaschine mit einem vorgegebenen Übersetzungsverhältnis zu koppeln. Teile des Getriebes sind jeweils in Gehäusen 15 an beiden Seiten des Mittelabschnitts 7 untergebracht. Von den Gehäusen 15 aus sich in entgegengesetzte Richtungen erstreckende Wellen 16, 17 treiben jeweils eine Zerkleinerungseinheit 11 des Mittelabschnitts 7 sowie eines der seitlichen Abschnitte 8 an. Die Wellen 17 der seitlichen Abschnitte 8 sind mit einem Abtrieb der Gehäuse 15 lösbar steckverbunden, um das oben erwähnte Schwenken der seitlichen Abschnitte 8 in die Transportstellung zu ermöglichen.

Die Zerkleinerungseinheiten 11 sind relativ zur Ernteeinheit 2 in begrenztem Umfang vertikal beweglich; um dieser Beweglichkeit Rechnung zu tragen, sind die Wellen 16, 17, an ihren Enden über (hier in elastischen Bälgen 18 verborgene) Kardangelenke an das Getriebe bzw. an die Zerkleinerungseinheit 11 gekoppelt.

Fig. 3 zeigt einen Teil des Erntevorsatzes 1 in Seitenansicht, einmal in einer bodennahen Betriebsstellung und einmal im während einer Anhebebewegung, die von der Erntemaschine beispielsweise ausgeführt wird, wenn sie von einer soeben abgeernteten Feldfläche in ein benachbartes Vorgewende einfährt. In der im linken Teil der Fig. 3 gezeigten Betriebsstellung liegt die Deckenplatte 12 des Gehäuses geringfügig oberhalb einer Ebene, in der die (hier mit 19 bezeichneten) Messer der Ernteeinheit rotieren. Eine nach unten aus dem Gehäuse vorstehende Kalotte 20 stützt sich am Boden 21 ab. Die Zerkleinerungseinheit 11 ist mit der Auffangwanne 4 über zwei Lenker 22, 23 verbunden. Diese Lenker 22, 23 können parallel und gleich lang sein, um eine Beibehaltung der Orientierung der Zerkleinerungseinheit 11 relativ zum Boden 21 zu ermöglichen, wenn die Ernteeinheit unter Beibehaltung ihrer Orientierung angehoben wird; im hier dargestellten Fall sind die Länge und Anordnung der Lenker 22, 23 so gewählt, dass sich die Orientierung der Zerkleinerungseinheit 11 beim Anheben der Ernteeinheit nicht ändert, obwohl deren Anhebung, wie bei einem Vergleich des rechten und des linken Teils der Fig. zu erkennen, mit einer leichten Schwenkbewegung verknüpft ist. Solange die Kalotte 20 mit dem Boden in Kontakt bleibt, ist die Wirkung der Zerkleinerungseinheit 11 unverändert. Wenn folglich die Erntemaschine beim Verlassen eines Pflanzenbestandes beginnt, den Erntevorsatz 1 anzuheben, dann hat dies zunächst keine Wirkung auf die Zerkleinerungseinheit 11, und diese kann, wenn die Geschwindigkeit der Anhebung sinnvoll an die Fahrgeschwindigkeit und die Bewegungsfreiheit der Zerkleinerungseinheit 11 angepasst ist, noch während des Anhebens die zuletzt geschnittenen Stoppeln zerstören.

Die Lenker 22, 23 können in sich starre Bauteile sein; im hier gezeigten Fall ist der obere der beiden Lenker 23 durch ein Stellglied gebildet; indem dessen Länge variiert wird, kann die Zerkleinerungseinheit zu einer Nickbewegung angetrieben werden.

Fig. 4 zeigt eine perspektivische Ansicht einer Zerkleinerungseinheit 11 und ihrer Verbindung zur Auffangwanne 4. Ein Beschlagteil zur Anbringung an der Rückseite der Auffangwanne 4 ist mit 24 bezeichnet. Der Lenker 22 hat die Form eines Bügels, der an seinen beiden Enden an das Beschlagteil 24 und mittig an das Gehäuse der Zerkleinerungseinheit 11 angelenkt ist. Ein Stellglied 25 greift am Beschlagteil 24 und am Lenker 22 an, um bei Bedarf die Zerkleinerungseinheit 11 in eine geschützte, eng an der Auffangwanne 4 anliegende Stellung anzuheben. Der Lenker 23 ist zweimal, jeweils beiderseits des Lenkers 22 vorgesehen; die Kammern ihrer doppelt wirkenden Stellglieder sind untereinander über Hydraulikleitungen 26 so gekoppelt, dass die Stauchung eines der Stellglieder die Streckung des jeweils anderen antreibt und so eine Wankbewegung der Zerkleinerungseinheit 11 ermöglicht. So kann sich die Orientierung der Zerkleinerungseinheit 11 im Betrieb der Kontur des Bodens anpassen.

Auf der Deckenplatte 12 des Gehäuses sind zwei Winkelgetriebe 27 montiert, die untereinander durch eine Welle 28 und mit der Welle 16 oder 17 durch ein weiteres Getriebe 29 gekoppelt sind. Die Winkelgetriebe 27 treiben jeweils eine Abtriebswelle an, die sich senkrecht zur Deckenplatte 12 ins Innere des Gehäuses erstreckt.

Wie in Fig. 5 zu sehen, ist jede dieser Abtriebswellen 30 drehfest mit einer der bereits mit Bezug auf Fig. 3 erwähnten Kalotten 20 verbunden. Die dem Boden 21 zugewandte Außenseite der Kalotte 20 ist sphärisch oder rotationsellipsoidisch gewölbt, wobei eine Drehachse 31 der Abtriebswelle 30 mit der kurzen Achse der Ellipse zusammenfällt. An einem Umfang 32 der Kalotte 20 sind zwei Zerkleinerungselemente 33 spiegelbildlich zueinander montiert, um einen Unterflurhäcksler 34 zu bilden. Die Verbindung der Zerkleinerungselemente 33 zur Kalotte 20 ist gelenkig mit einer zur Drehachse 31 parallelen Schwenkachse 35, so dass die Zerkleinerungselemente 33 ausweichen können, wenn sie an ein nicht nachgiebiges Hindernis anschlagen.

Der Radius des Umfangs 32 ist kleiner als der Abstand zwischen der durch den Radius 32 definierten Ebene und einem Punkt 36, an dem die Drehachse 31 die Unterseite der Kalotte 20 kreuzt. Die Oberfläche der Kalotte 20 verläuft daher immer unter einem kleinen Winkel zum Boden 21, so dass die Kalotte 20 einer in Maßen unebenen Bodenoberfläche sicher folgen kann.

Beim Anschlagen an einen Maisstoppel darf das Zerkleinerungselement 33 nicht zurückweichen, sondern soll diesen zerschlagen und in eine Vielzahl von Bruchstücken zertrümmern. Dazu sollte das Gewicht des Zerkleinerungselements 33 das der Stoppeln um ein Mehrfaches übertreffen. Das Zerkleinerungselement 33 ist daher keine schmale Klinge, sondern ein gedrungener Metallkörper mit einer Ausdehnung in Richtung der Drehachse von mehreren Millimetern oder gar Zentimetern. Im hier gezeigten Fall hat das Zerkleinerungselement 33 einen H-ähnlichen Querschnitt, der aus einer zylindrischen Grundform durch Aussparen je einer Nut 37 an Ober- und Unterseite abgeleitet werden kann.

Kalotte 20 und Zerkleinerungselement 33 sind im Betrieb einer erheblichen Reibbeanspruchung ausgesetzt und sollten daher aus einem hinreichend verschleißfesten Stahl bestehen. Um die Standzeit von Kalotte 20 und Zerkleinerungselement 33 weiter zu verbessern, kann ein harter, strapazierfähiger Überzug, insbesondere eine PTA-Beschichtung, an der Außenseite der Kalotte 20 und den Schlagflächen des Zerkleinerungselements 33 vorgesehen sein.

Der Querschnitt des Zerkleinerungselements 33 ist symmetrisch bezüglich einer durch die Drehachse 31 verlaufenden Ebene. Das Zerkleinerungselement 33 weist somit zwei Schlagflächen 38 auf, von denen jeweils nur eine genutzt wird. Dies erleichtert zum einen den Zusammenbau der Zerkleinerungseinheiten 11, da der spätere Drehsinn des Unterflurhäckslers 34 nicht berücksichtigt zu werden braucht, zum anderen bietet die gezeigte lösbare Befestigung der Zerkleinerungselemente 33 dem Benutzer die Möglichkeit, diese zu wenden, wenn eine der Schlagflächen 38 verschlissen ist.

Die Ausdehnung des Zerkleinerungselements 33 in radialer Richtung ist durch die Anforderung bestimmt, dass im Betrieb keine Stoppeln intakt die Kalotte 20 erreichen und von dieser zu Boden gedrückt werden dürfen, sondern dass sie zuverlässig vorher von einem um die Achse 30 rotierenden Zerkleinerungselement 33 getroffen und zertrümmert werden müssen. Folglich muss in der Zeit, die die Erntemaschine braucht, um die Länge des Zerkleinerungselements 33 zurückzulegen, die Fläche vor der Kalotte 20 mindestens einmal von einem Zerkleinerungselement 33 überstrichen werden, d.h. die Getriebe von Erntemaschine und Erntevorsatz, die die Zerkleinerungseinheit an den Motor der Erntemaschine koppeln, müssen eine Übersetzung gewährleisten bei der das Produkt aus radialer Ausdehnung der Zerkleinerungselemente 33, der Anzahl der Zerkleinerungselemente 33 an einer Kalotte 20 und der Drehzahl der Kalotte 20 größer ist als die Fahrgeschwindigkeit der Erntemaschine.

Die Wankbeweglichkeit der Zerkleinerungseinheit 11 erlaubt es, jede der beiden Kalotten 20 im Wesentlichen kontinuierlich mit dem Boden 21 in Kontakt zu halten, so dass die Zerkleinerungselemente 33 auch bei in Maßen unebenem Boden die Stoppeln in einem gleichbleibenden, kleinen Abstand vom Boden erfassen und zerschlagen können, so dass eventuell im Boden zurückbleibende Reste nicht mehr groß genug sind, um einem Schädling als Winterunterschlupf dienen zu können.

### Bezugszeichen

- 1: Erntevorsatz
- 2: Ernteeinheit
- 3: Spitze
- 4: Auffangwanne
- 5: Förderschnecke
- 6: Öffnung
- 7: Mittelabschnitt
- 8: seitlicher Abschnitt
- 9: Stellglied
- 10: Achse
- 11: Zerkleinerungseinheit
- 12: Oberseite
- 13: Seitenwand
- 14: Schürze
- 15: Gehäuse
- 16: Welle
- 17: Welle
- 18: Balg
- 19: Messer
- 20: Kalotte
- 21: Boden
- 22: Lenker
- 23: Lenker
- 24: Beschlagteil
- 25: Stellglied
- 26: Hydraulikleitung
- 27: Winkelgetriebe
- 28: Welle
- 29: Getriebe
- 30: Abtriebswelle
- 31: Drehachse
- 32: Umfang
- 33: Zerkleinerungselement
- 34: Unterflurhäcksler
- 35: Schwenkachse
- 36: Punkt
- 37: Nut
- 38: Schlagfläche

## Patentansprüche

1. Erntevorsatz (1) für eine selbstfahrende Erntemaschine mit einer Ernteeinheit (2) zum Schneiden und Bergen von bodenfernen Teilen eines zu erntenden Pflanzenbestands und einer Zerkleinerungseinheit (11) zum Zerkleinern von von der Ernteeinheit (2) nicht geborgenen bodennahen Teilen des Pflanzenbestands, die wenigstens einen beweglich an die Ernteeinheit (2) gekoppelten, von einem Gehäuse (12-14) umgebenen und im Betrieb am Boden (21) abgestützten Unterflurhäcksler (34) umfasst,
**dadurch gekennzeichnet,**
**dass** der Unterflurhäcksler (34) am Boden (21) durch eine Kalotte (20) abgestützt ist, die um eine insbesondere vertikale Drehachse (31) drehangetrieben ist und an ihrem Umfang (32) mehrere um die Drehachse (31) umlaufende Zerkleinerungselemente (33) trägt.

2. Erntevorsatz nach Anspruch 1, bei dem jedes der Zerkleinerungselemente (33) an den Umfang (32) der Kalotte (20) um eine zur Drehachse (31) parallele Achse (35) schwenkbar angelenkt ist.

3. Erntevorsatz nach Anspruch 1 oder 2, bei dem der Radius des Umfangs (32) der Kalotte (20), an dem die Zerkleinerungselemente (33) angeordnet sind, größer ist als der entlang der Drehachse (31) gemessene Abstand zwischen dem Umfang (31) und einem untersten Punkt (36) der Kalotte (20).

4. Erntevorsatz nach einem der Ansprüche 1 bis 3, bei dem eine Unterseite der Kalotte (20) wenigstens um die Drehachse (31) herum sphärisch oder abgeflacht ellipsoidisch ist.

5. Erntevorsatz nach einem der Ansprüche 1 bis 4, bei dem die Zerkleinerungselemente (33) stumpfe Schlagflächen (38) aufweisen.

6. Erntevorsatz nach Anspruch 5, bei dem jedes Zerkleinerungselement (33) in Bezug auf seine Drehrichtung je eine vordere und eine hintere Schlagfläche (38) aufweist.

7. Erntevorsatz nach einem der Ansprüche 1 bis 6, bei dem die Zerkleinerungselemente (33) und/oder die Kalotte (20) eine PTA-Beschichtung aufweisen.

8. Erntevorsatz nach einem der vorhergehenden Ansprüche, bei dem das Gehäuse (12- 14) mehreren, vorzugsweise zwei, Unterflurhäckslern (34) gemeinsam ist.

9. Erntevorsatz nach Anspruch 7, bei dem das Gehäuse (12-14) relativ zur Ernteeinheit (1) wankbeweglich ist.

10. Erntevorsatz nach Anspruch 7 oder 8, bei dem das Gehäuse (12-14) mit der Ernteeinheit (1) über mehrere Lenker (22, 23) verbunden ist, die in einer Seitenansicht ein Viergelenk bilden und/oder die in Breitenrichtung beabstandet sind und/oder von denen wenigstens einer ein Stellglied umfasst oder mit einem Stellglied (25) gekoppelt ist.

11. Erntevorsatz nach einem der vorhergehenden Ansprüche, bei dem das Gehäuse eine Deckenplatte (12), durch die sich die Drehachse (31) erstreckt, und sich von Rändern der Deckenplatte (12) aus nach unten erstreckende Wände (13, 14) aufweist, wobei die Wände (13, 14) sich vorzugsweise bis unter die Ebene des Umfangs (32) erstrecken und vorzugsweise wenigstens zum Teil flexibel sind.

12. Erntemaschine mit einem Erntevorsatz (1) nach einem der Ansprüche 1 bis 7, bei dem die Zerkleinerungseinheit (11) an einen Fahrantrieb der Erntemaschine so gekoppelt ist, dass die Umlaufgeschwindigkeit der Zerkleinerungselemente (33) ein Mehrfaches der Fahrgeschwindigkeit der Erntemaschine ist.

13. Erntemaschine mit einem Erntevorsatz nach einem der Ansprüche 1 bis 7, bei dem die Zerkleinerungseinheit (11) an einen Fahrantrieb der Erntemaschine so gekoppelt ist, dass das Produkt aus radialer Ausdehnung der Zerkleinerungselemente (33), Anzahl der Zerkleinerungselemente (33) an einer Kalotte (20) und Drehzahl der Kalotte (20) größer ist als die Fahrgeschwindigkeit der Erntemaschine.

## Claims

1. A harvester front attachment (1) for a self-propelled harvesting machine, with a harvesting unit (2) for cutting and collecting parts of a plant crop to be harvested which are at a distance from the ground, and a shredding unit (11) for shredding parts of the plant crop which are close to the ground and which are not collected by the harvesting unit (2), which comprises at least one underfloor chopper (34) that is movably coupled to the harvesting unit (2), surrounded by a housing (12 - 14) and supported on the ground (21) during operation,
**characterized in that**
the underfloor chopper (34) is supported on the ground (21) by a dome (20) which is driven in rotation about an axis of rotation (31), which in particular is vertical, and which carries at its periphery (32) a plurality of shredding elements (33) which revolve about the axis of rotation (31).

2. The harvester front attachment according to claim 1, in which each of the shredding elements (33) is pivotally articulated on the periphery (32) of the dome (20) about an axis (35) which is parallel to the axis of rotation (31).

3. The harvester front attachment according to claim 1 or claim 2, in which the radius of the periphery (32) of the dome (20) on which the shredding elements (33) are disposed is larger than the distance measured along the axis of rotation (31) between the periphery (31) and a lowermost point (36) of the dome (20).

4. The harvester front attachment according to one of claims 1 to 3, in which an underside of the dome (20) is spherical or is a flattened ellipse, at least around the axis of rotation (31).

5. The harvester front attachment according to one of claims 1 to 4, in which the shredding elements (33) have blunt impact surfaces (38).

6. The harvester front attachment according to claim 5, in which each shredding element (33) has a respective front and a rear impact surface (38) with respect to its direction of rotation.

7. The harvester front attachment according to one of claims 1 to 6, in which the shredding elements (33) and/or the dome (20) have a PTA coating.

8. The harvester front attachment according to one of the preceding claims, in which the housing (12 - 14) is common to a plurality of, preferably two, underfloor choppers (34).

9. The harvester front attachment according to claim 7, in which the housing (12 - 14) is movable relative to the harvesting unit (1) by tilting.

10. The harvester front attachment according to claim 7 or claim 8, in which the housing (12 - 14) is connected to the harvesting unit (1) via a plurality of connecting rods (22, 23) which form a four-bar linkage in side view and/or which are separated in the width direction and/or of which at least one comprises an actuator or is coupled to an actuator (25).

11. The harvester front attachment according to one of the preceding claims, in which the housing has a top plate (12) through which the axis of rotation (31) extends, and walls (13, 14) which extend downwards from edges of the top plate (12), wherein the walls (13, 14) preferably extend to below the plane of the periphery (32) and are preferably flexible, at least in part.

12. A harvesting machine with a harvester front attachment (1) according to one of claims 1 to 7, in which the shredding unit (11) is coupled to a propulsion unit of the harvesting machine in a manner such that the speed of rotation of the shredding elements (33) is a multiple of the driving speed of the harvesting machine.

13. The harvesting machine with a harvester front attachment according to one of claims 1 to 7, in which the shredding unit (11) is coupled to a propulsion unit of the harvesting machine in a manner such that the product of the radial extent of the shredding elements (33), the number of shredding elements (33) on one dome (20) and the rotational speed of the dome (20) is larger than the driving speed of the harvesting machine.

## Revendications

1. Bec cueilleur (1) pour une machine de récolte automotrice dotée d'une unité de récolte (2), destinée à couper et récupérer des parties éloignées du sol de cultures à récolter, et d'une unité de broyage (11) qui est destinée à broyer des parties proches du sol des cultures qui n'ont pas été récupérées par l'unité de récolte (2) et qui comprend au moins un broyeur sous-bec (34) couplé de façon mobile à l'unité de récolte (2) et entouré d'un boîtier (12 à 14) et s'appuyant au sol (21) lors du fonctionnement,
**caractérisé en ce que**
le broyeur sous-bec (34) prend appui au sol (21) par l'intermédiaire d'une calotte (20) qui est entraînée en rotation autour d'un axe de rotation (31), notamment vertical, et porte sur son pourtour (32) plusieurs éléments de broyage (33) tournant autour de l'axe de rotation (31).

2. Bec cueilleur selon la revendication 1, dans lequel chacun des éléments de broyage (33) est articulé sur le pourtour (32) de la calotte (20) avec possibilité de pivotement autour d'un axe (35) parallèle à l'axe de rotation (31).

3. Bec cueilleur selon la revendication 1 ou 2, dans lequel le rayon du pourtour (32) de la calotte (20), sur lequel sont disposés les éléments de broyage (33), est plus grand que la distance, mesurée le long de l'axe de rotation (31), entre le pourtour (31) et un point le plus bas (36) de la calotte (20).

4. Bec cueilleur selon une des revendications 1 à 3, dans lequel une face inférieure de la calotte (20) présente une forme sphérique ou éllipsoïdale aplatie, au moins autour de l'axe de rotation (31).

5. Bec cueilleur selon une des revendications 1 à 4, dans lequel les éléments de broyage (33) présentent des surfaces de frappe (20) obtuses.

6. Bec cueilleur selon la revendication 5, dans lequel chaque élément de broyage (33) présente une surface de frappe avant et une surface de frappe arrière (38), rapporté à son sens de rotation.

7. Bec cueilleur selon une des revendications 1 à 6, dans lequel les éléments de broyage (33) et/ou la calotte (20) présentent un revêtement PTA.

8. Bec cueilleur selon une des revendications précédentes, dans lequel le boîtier (12 à 14) est commun à plusieurs, de préférence à deux broyeurs sous bec (34).

9. Bec cueilleur selon la revendication 7, dans lequel le boîtier (12 à 14) présente une mobilité de roulis par rapport à l'unité de récolte (1).

10. Bec cueilleur selon la revendication 7 ou 8, dans lequel le boîtier (12 à 14) est relié à l'unité de récolte (1) par plusieurs bras (22, 23) qui, dans une vue de côté, constituent un système à quatre articulations et/ou qui sont espacés dans le sens de la largeur et/ou dont au moins un comprend un organe d'actionnement ou est accouplé à un organe d'actionnement (25).

11. Bec cueilleur selon une des revendications précédentes, dans lequel le boîtier présente une plaque de dessus (12), à travers laquelle s'étend l'axe de rotation (31), et des parois (13, 14) qui s'étendent vers le bas depuis des bords de la plaque de dessus (12), lesdites parois (13, 14) s'étendant de préférence jusqu'en dessous du plan du pourtour (32) et étant de préférence au moins partiellement souples.

12. Machine de récolte comprenant un bec cueilleur (1) selon une des revendications 1 à 7, dans lequel l'unité de broyage (11) est accouplée à un dispositif d'entraînement de déplacement de la machine de récolte, de manière à ce que la vitesse de rotation des éléments de broyage (33) corresponde à un multiple de la vitesse de déplacement de la machine de récolte.

13. Machine de récolte comprenant un bec cueilleur selon une des revendications 1 à 7, dans lequel l'unité de broyage (11) est accouplée à un dispositif d'entraînement de déplacement de 1a machine de récolte, de manière à ce que le produit de la dimension radiale des éléments de broyage (33), du nombre d'éléments de broyage (33) sur une calotte (20) et de 1a vitesse de rotation de la calotte (20) soit supérieur à la vitesse de déplacement de la machine de récolte.
